# EUROPÄISCHE PATENTSCHRIFT

(11) **EP 0 701 671 B1**
(45) Veröffentlichungstag und Bekanntmachung des Hinweises auf die Patenterteilung: **04.12.1996**
(21) Anmeldenummer: 94919622.4
(22) Anmeldetag: 09.06.1994
(51) Int. Cl.: F16H 61/46

(54) **HYDROSTATISCHER FAHRANTRIEB**
HYDROSTATIC TRAVELLING GEAR
SYSTEME DE TRANSPORT HYDROSTATIQUE

(30) Priorität: 09.06.1993 DE 4319280
(43) Veröffentlichungstag der Anmeldung: 20.03.1996
(73) Patentinhaber: BRUENINGHAUS HYDROMATIK GMBH, D-89275 Elchingen (DE)
(72) Erfinder: BECK, Jochen, D-89077 Ulm (DE)
(74) Vertreter: Körber, Wolfhart, Dr. rer.nat.
(86) Internationale Anmeldenummer: EP9401887
(87) Internationale Veröffentlichungsnummer: WO9429619

(56) Entgegenhaltungen:
- EP-A- 0 477 510
- FR-A- 2 515 582
- SONDERDRUCK 1/84, FIRMA MANNESMANN REXROTH Seiten 1 - 6 K. HÖGEMANN 'Hydraulik im Forst' in der Anmeldung erwähnt

## Beschreibung

Die Erfindung betrifft einen hydrostatischen Fahrantrieb nach dem Oberbegriff des Anspruches 1.

Aus dem im Sonderdruck Nr. 1/84 der Firma Mannesmann Rexroth erschienenen Aufsatz "Hydraulik im Forst" von Dipl.-Ing. Klaus Högemann ist ein derartiger hydrostatischer Fahrantrieb beschrieben, der ein mobiles Forstfahrzeug antreibt und mit einer sog. Grenzlastregelung sowie einer sog. Vorsteuerung ausgebildet ist.

Bei der beschriebenen Grenzlastregelung ändert sich die Fahrgeschwindigkeit mit der mittels des Gaspedals vorgegebenen Drehzahl des Antriebsmotors sowie mit dem Verdrängungsvolumen der Hydropumpe, das in Abhängigkeit von einem dieser Drehzahl des Antriebsmotors proportionalen Stelldruck automatisch verstellt wird. Der hydrostatische Fahrantrieb befindet sich hierbei im sog. automotiven bzw. automatischen Fahrbetrieb, der in der Hauptsache bei Transport- und Straßenfahrten eingesetzt wird.

Im Fall der Vorsteuerung wird die Fahrgeschwindigkeit bei konstanter Drehzahl des Antriebsmotors allein durch das Verdrängungsvolumen der Hydropumpe bestimmt, das in Abhängigkeit von dem in die Stelleinrichtung einströmenden Volumen des mit dem drehzahl abhängigen Stelldruck beladenen Druckmittels verstellt wird. Diese Vorsteuerung erlaubt die im Arbeitseinsatz des Fahrzeuges besonders wichtige feinfühlige Steuerung der Fahrgeschwindigkeit mittels eines Handsteuergebers.

Die Volumensteuerung des Druckmittels während der Vorsteuerung erfolgt mit Hilfe der mechanisch ausgebildeten Rückführeinrichtung, die einen Rückführhebel umfaßt, der am Stellkolben der als Stellzylinder ausgebildeten Stelleinrichtung sowie an der Steuerbüchse des Vorsteuerventils befestigt ist und bei entsprechend der jeweiligen Stellung des Handsteuergebers geöffnetem Vorsteuerventil die Stellbewegung des Stellkolbens auf die Steuerbüchse so lange überträgt, bis das Vorsteuerventil wieder seine Schließstellung einnimmt.

Durch weiteres Öffnen des Vorsteuerventils mittels des Handsteuergebers über den maximalen Weg des Rückführhebels hinaus wird die Rückführung unwirksam gemacht und damit das Vorsteuerventil in die Durchflußendstellung überführt, in welcher das mit dem drehzahlproportionalen Stelldruck beladene Druckmittel so lange in den Stellzylinder einströmt, bis Kraftgleichgewicht an dessen federbelasteten Stellkolben herrscht. Der hydrostatische Fahrantrieb ist auf diese Weise von der Vorsteuerung auf die Grenzlastregelung umgeschaltet.

Aufgrund der der jeweiligen Kennlinie entsprechenden Abhängigkeit des Verdrängungsvolumens der Hydropumpe von der Drehzahl des Antriebsmotors begrenzt beim Fahren mit der Vorsteuerung, d.h. beim Fahren mit konstanter Drehzahl, der dieser konstanten Drehzahl entsprechende Stelldruck den Stellweg des Stellkolbens und damit das maximale Verdrängungsvolumen der Hydropumpe, das die Fahrgeschwindigkeit und das Drehmoment bestimmt. Der Fahrbereich während der Vorsteuerung entspricht somit dem Bereich unterhalb der Kennlinie. Dies ist insofern nachteilig, als hohe Antriebsmomente nur bei entsprechend hohen Drehzahlen des Antriebsmotors und damit hohen Fahrgeschwindigkeiten zur Verfügung stehen.

Es ist Aufgabe der Erfindung, bei dem eingangs genannten hydrostatischen Fahrantrieb die Voraussetzung zu schaffen, daß auch bei geringeren Fahrgeschwindigkeiten hohe Antriebsmomente zur Verfügung stehen.

Diese Aufgabe wird durch die kennzeichnenden Merkmale des Anspruches 1 gelöst. Die Bereitstellung der Schalteinrichtung sowie des von der Drehzahl des Antriebsmotors unabhängigen Drucks des Druckmittels in der Druckmittelleitung erlaubt es, diesen Druck als drehzahlunabhängigen Stelldruck der Stelleinrichtung zuzuführen und auf diese Weise die Abhängigkeit des Verdrängungsvolumens der Hydromaschine von der Drehzahl des Antriebsmotors außer Kraft zu setzen und eine Verdrängungsvolumeneinstellung zu erzielen, die der Größe des drehzahl unabhängigen Stelldrucks entspricht. Dieser ist vorzugsweise mindestens gleich dem Maximalwert des drehzahl proportionalen Stelldrucks, so daB die dementsprechend auf maximales Verdrängungsvolumen eingestellte Hydromaschine ein entsprechend hohes Antriebsmoment zur Verfügung stellt. Bei in der Grundstellung befindlicher Schalteinrichtung und wirksamer Rückführung des Vorsteuerventils umfaßt der Fahrbereich des erfindungsgemäßen Fahrantriebs sowohl den Bereich unterhalb der Kennlinie des drehzahlproportionalen Stelldrucks als auch den Bereich oberhalb dieser Kennlinie bis zur Kennlinie des drehzahlunabhängigen Stelldrucks.

Die Schalteinrichtung kann manuell oder zwecks Entlastung des Fahrers automatisch, vorzugsweise in Abhängigkeit von der Drehzahl des Antriebsmotors, von der Grund- in die Schaltstellung und zurück umgeschaltet werden. Das Umschalten der Schalteinrichtung und des Vorsteuerventils von der Grund- in die Schaltstellung und zurück bzw. vom Durchflußverstellbereich mit wirksamer Rückführung in die Durchflußendstellung außerhalb des Bereichs der wirksamen Rückführung und zurück erfolgt zweckmäßigerweise etwa gleichzeitig. Auf diese Weise wird sichergestellt, daß nur im Bereich der Vorsteuerung drehzahlunabhängig, ansonsten jedoch drehzahlabhängig gefahren wird. Dies kann bei manuellem Umschalten der Schalteinrichtung durch einen Steuergeber erzielt werden, mit dem gleichzeitig das Vorsteuerventil geschaltet wird.

Während der Vorsteuerung besteht die Möglichkeit, das Verdrängungsvolumen der Hydromaschine unabhängig von der Drehzahl des Antriebsmotors zu verstellen und somit beispielsweise bei Leerlaufdrehzahl, wenn ausreichende Leistung des Antriebsmotors zur Verfügung steht, und dementsprechend geringer Geräuschentwicklung zu fahren. Steht keine ausreichende Leistung des Antriebsmotors zur Verfügung, so wird das Vorsteuerventil zweckmäßigerweise mittels des Gaspedals zur Steuerung der Drehzahl des Antriebsmotors betätigt.

Die Schalteinrichtung kann gemäß einer ersten Ausgestaltung der Erfindung als ein 3/2-Wegeventil ausgebildet sein, das einen Arbeitsanschluß an einen ersten, zur Einrichtung zum Erzeugen des drehzahlproportionalen Stelldrucks führenden Abschnitt der Stelldruckleitung, einen Arbeitsanschluß an einen zweiten, zum Vorsteuerventil weiterführenden Abschnitt der Stelldruckleitung und einen Arbeitsanschluß an die Druckmittelleitung aufweist. Dieses 3/2-Wegeventil ist bei automatischer Umschaltung zweckmäßigerweise mit dem drehzahl proportionalen Stelldruck in Richtung Schaltstellung ansteuerbar.

Gemäß einer anderen Ausgestaltung ist die Schalteinrichtung als ein in der Druckmittelleitung angeordnetes Rückschlagventil ausgebildet, das in Richtung der Stelldruckleitung öffnet, wenn der drehzahlunabhängige Stelldruck größer als der drehzahlproportionale Stelldruck ist. Hierbei kann in der Druckmittelleitung strömungsaufwärts des Rückschlagventils ein Druckreduzierventil angeordnet sein, das vorzugsweise zwecks Erzeugung unterschiedlicher Ausgangsdrücke verstellbar ist. Auf diese Weise kann der drehzahl proportionale Stelldruck mit unterschiedlichen Werten des drehzahlunabhängigen Stelldrucks übersteuert und somit der Schaltpunkt der Schalteinrichtung verstellt werden.

Weitere Merkmale und Vorteile der Erfindung ergeben sich aus den verbleibenden Unteransprüchen.

Nachstehend ist die Erfindung anhand dreier bevorzugter Ausführungsbeispiele unter Bezugnahme auf die Zeichnung näher beschrieben. Es zeigen:
- Fig. 1: einen Schaltplan eines hydrostatischen Fahrantriebs nach dem ersten Ausführungsbeispiel der Erfindung,
- Fig. 2: einen Schaltplan eines hydrostatischen Fahrantriebs nach dem zweiten Ausführungsbeispiel der Erfindung, und
- Fig. 3: einen Schaltplan eines hydrostatischen Fahrantriebs nach dem dritten Ausführungsbeispiel der Erfindung.

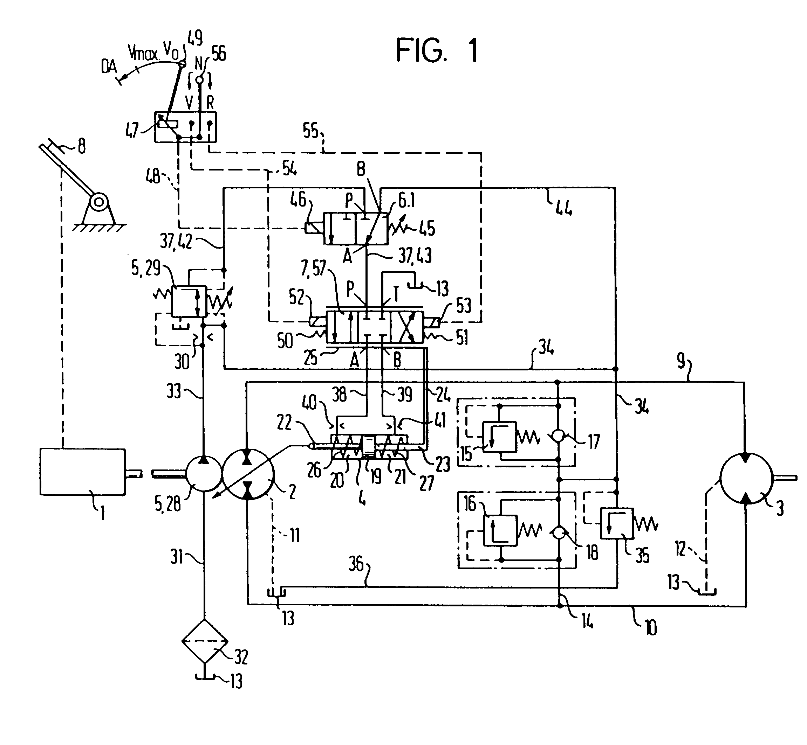

Der in Figur 1 dargestellte hydrostatische Fahrantrieb, beispielsweise für einen Stapler oder Kompaktlader, umfaßt einen Antriebsmotor 1, ein hydrostatisches Getriebe mit einer Hydropumpe 2 veränderlichen Verdrängungs- oder Fördervolumens und einen Hydromotor 3 konstanten Verdrängungs- oder Schluckvolumens für den Antrieb wenigstens eines nicht gezeigten Fahrzeug-Antriebsrades, eine Stelleinrichtung 4 zum Verstellen des Fördervolumens der Hydropumpe 2, eine Einrichtung 5 zum Erzeugen eines der Drehzahl des Antriebsmotors 1 proportionalen Stelldrucks, eine Schalteinrichtung 6.1 und ein der Stelleinrichtung 4 zugeordnetes Vorsteuerventil 7.

Der Antriebsmotor 1 ist beispielsweise ein Dieselmotor mit veränderlicher Drehzahl und mit einem Gaspedal 8 zur Vorgabe der jeweils gewünschten Solldrehzahl verbunden.

Die Hydropumpe 2 ist eine reversierbare Axialkolbenpumpe, die mechanisch mit dem Antriebsmotor 1 gekoppelt ist und im geschlossenen Kreislauf über zwei Arbeitsleitungen 9,10 mit dem Hydromotor 3, ebenfalls in Axialkolbenausführung, in Fluidverbindung steht. Die Hydropumpe 2 und der Hydromotor 3 sind über je eine Leckölleitung 11,12 an den Tank 13 angeschlossen. Beide Arbeitsleitungen 9,10 sind über eine Leitung 14 miteinander verbunden, an die zwei Druckbegrenzungsventile 15,16, jeweils im Nebenschluß und je ein Rückschlagventil 17,18 umgehend, angeschlossen sind. Jedes Rückschlagventil 17,18 sperrt in Richtung des jeweils anderen Rückschlagventils 18 bzw. 17, so daß die Druckbegrenzungsventile 15,16 den Arbeitsdruck in der jeweils den höheren Druck führenden Arbeitsleitung 9 bzw. 10 begrenzen.

Die Stelleinrichtung 4 besteht aus einem doppeltwirkenden hydraulischen Stellzylinder, in welchem ein Gleichgangkolben 19 zwei Druckräume 20,21 abgrenzt, über eine Hälfte 22 einer beidseitigen Kolbenstange 22,23 mit der z.B. Schrägscheibe der Hydropumpe 1 und mit der anderen Hälfte 23 über einen Rückführhebel 24 mit einer Steuerbüchse 25 des Vorsteuerventils 7 gekoppelt ist. Der Gleichgangkolben 19 ist mittels je einer auf den Kolbenstangenhälften 22,23 angeordneten Zentrierfeder 26 bzw. 27 in beiden Druckräumen 20 bzw. 21 federzentriert.

Die Einrichtung 5 zum Erzeugen des drehzahl proportionalen Stelldrucks umfaßt eine mit dem Antriebsmotor 1 mechanisch gekoppelte Hilfspumpe 28 konstanten Fördervolumens und ein sog. DA-Regelventil 29 mit einer vorgeschalteten Blende 30. Eine Ansaugleitung 31 mit darin angeordnetem Filter 32 verbindet den Tank 13 mit dem Eingang der Hilfspumpe 28, deren Ausgang über eine Anschlußleitung 33 mit dem Eingang des DA-Regelventils 29 in Verbindung steht. Eine Speiseleitung 34 ist strömungsaufwärts der Blende 30 an die Anschlußleitung 31 angeschlossen und führt zur Leitung 14, in die sie im Bereich zwischen beiden Rückschlagventilen 17,18 einmündet. Ein Druckbegrenzungsventil 35 zur Begrenzung des Speisedrucks ist an die Speiseleitung 34 und über eine Entlastungsleitung 36 an den Tank 13 angeschlossen. Eine am Ausgang des DA-Regelventils 29 angeschlossene Stelldruckleitung 37 führt zum Vorsteuerventil 7, von dem aus zwei Stelldruckzweigleitungen 38,39 zu den Druckräumen 20 bzw. 21 des Stellzylinders 4 führen. Je eine Blende 40,41 ist in den Stelldruckzweigleitungen 38,39 angeordnet.

Die Schalteinrichtung 6.1 ist ein 3/2-Wegeventil, das in der Stelldruckleitung 37 angeordnet ist und diese in einen zum DA-Regelventil 29 führenden ersten Stelldruckleitungsabschnitt 42 und einen zum Vorsteuerventil 7 führenden zweiten Stelldruckleitungsabschnitt 43 aufteilt. Das 3/2-Wegeventil 6.1 weist einen Arbeitsanschluß P an den ersten Stelldruckleitungsabschnitt 42, einen zweiten Arbeitsanschluß A an den zweiten Stelldruckleitungsabschnitt 43 sowie einen Arbeitsanschluß B an eine Druckmittelleitung 44 auf, die in die Speiseleitung 34 einmündet. Das 3/2-Wegeventil 6.1 wird durch eine einstellbare Druckfeder 45 in Richtung der in Figur 1 gezeigten Grundstellung beaufschlagt, in der der Arbeitsanschluß P gesperrt und die verbleibenden Arbeitsanschlüsse A und B miteinander verbunden sind. Zwecks Betätigung des 3/2-Wegeventils 6.1 ist auf dessen der Druckfeder 45 gegenüberliegenden Seite ein Proportionalmagnet 46 vorgesehen, der über eine an ein Potentiometer 47 angeschlossene Steuersignalleitung 48 mit einem vom Potentiometer 47 erzeugten Steuersignal ansteuerbar ist. Das vom Potentiometer 47 erzeugte Steuersignal ist dem jeweiligen Verstellweg eines Handsteuergebers 49 proportional. Bei Einstellung dieses Handsteuergebers 49 auf "DA" erzeugt der mit dem entsprechenden Steuersignal angesteuerte Proportionalmagnet 46 eine Kraft, die die Kraft der Druckfeder 45 übersteigt und das 3/2-Wegeventil 6.1 von der Grundstellung in die Schaltstellung umschaltet, in der bei gesperrtem Arbeitsanschluß B die Arbeitsanschlüsse P und A miteinander verbunden sind. Durch Verstellung der Druckfeder 45 kann der Schaltpunkt des 3/2-Wegeventils 6.1 verschoben werden.

Das Vorsteuerventil 7 ist ein mittels Zentrierfedern 50,51 federzentriertes drosselndes 4/3-Wegeventil mit einem Arbeitsanschluß T zum Tank 13, einem Arbeitsanschluß P zum zweiten Stelldruckleitungsabschnit 42 und zwei Arbeitsanschlüssen A, B an die Stelldruckzweigleitung 37 bzw. 38. In seiner in Figur 1 dargestellten (federzentrierten) Mittelstellung sind sämtliche Arbeitsanschlüsse A,B,P und T des Vorsteuerventils 7 gesperrt, so daß der Gleichgangkolben 19 des Stellzylinders 4 seine in Figur 1 gezeigte (federzentrierte) Mittelstellung und damit die Hydropumpe 2 ihre Nullstellung mit Null-Fördervolumen einnimmt. Zwecks Betätigung des Vorsteuerventils 7 sind an dessen einander gegenüberliegenden Enden je ein Proportionalmagnet 52 bzw. 53 vorgesehen, die über je eine Steuersignalleitung 54 bzw. 55 und einen Fahrtrichtungsschalter 56 mit dem vom Potentiometer 47 erzeugten Steuersignal ansteuerbar sind. Je nach Stellung des Fahrtrichtungsschalters 56 auf Vorwärts- oder Rückwärtsfahrt (Stellung V bzw. Stellung R) verschiebt der linke oder rechte Proportionalmagnet 52 bzw. 53 den Steuerschieber 57 des Vorsteuerventils 7 um einen dem Steuersignal proportionalen Stellweg in eine rechte bzw. linke Durchflußstellung, in der die Arbeitsanschlüsse P und B sowie C und A bzw. P und A sowie T und B des Vorsteuerventils 7 miteinander verbunden sind. Bei Einstellung des Handsteuergebers 49 auf Vₘₐₓ ist der Stellweg des Steuerschiebers 57 gleich dem maximalen Stellweg des Gleichgangkolbens 19. Der diesem maximalen Stellweg entsprechende Durchflußverstellbereich des Vorsteuerventils ist ein Bereich der Vorsteuerung bzw. der wirksamen Rückführung, in dem der Gleichgangkolben 19 bei seiner Bewegung in Richtung Endstellung die Steuerbüchse 25 über den Rückführhebel 24 in gleiche Richtung um den gleichen Betrag mitnimmt, d.h. sie über den Steuerschieber 57 hinweg so lange verschiebt, bis das Vorsteuerventil 7 in seine Mittelstellung zurückgeführt ist. Bei Einstellung des Handsteuergebers 49 auf die Stellung DA wird der Steuerschieber 57 des Vorsteuerventils 7 über die Endstellung des Gleichgangkolbens 19 hinaus verschoben und dadurch das Vorsteuerventil 7 in eine Durchflußendstellung außerhalb des Bereichs der wirksamen Rückführung, d.h. auf drehzahlabhängige (DA)Regelung umgeschaltet. Diese Durchflußendstellung wird so lange aufrechterhalten, wie sich der Handsteuergeber 49 in der Stellung DA befindet.

Die Funktion des hydrostatischen Fahrantriebs nach Fig. 1 ist wie folgt:
Bei stehendem Fahrzeug befindet sich der Handsteuergeber 49 in der in Fig. 1 gezeigten Ausgangsstellung V₀, so daß das Potentiometer 47 kein Steuersignal erzeugt und dementsprechend das schaltende 3/2-Wegeventils 6.1, das Vorsteuerventil 7 und somit der Stellzylinder 4 die Grundstellung bzw. die federzentrierte Mittelstellung einnehmen. Die durch den im Leerlauf drehenden Antriebsmotor 1 angetriebene Hydropumpe 2 ist folglich auf Null-Fördervolumen eingestellt und treibt den Hydromotor 3 dementsprechend nicht an.

Um Vorwärtsfahrt aufzunehmen, wird der Fahrtrichtungsschalter 56 auf Stellung V umgeschaltet und der Handsteuergeber 49 in Richtung Vₘₐₓ verstellt. Der in Figur 1 linke Proportionalmagnet 52 verschiebt den Steuerschieber 57 des Vorsteuerventils 7 in Fig. 1 nach rechts in eine der Stellung des Handsteuergebers 49 entsprechende Durchflußstellung, so daß der Stelldruckleitungsabschnitt 43 über die linke Stelldruckzweigleitung 38 mit dem linken Druckraum 20 des Stellzylinders 4 verbunden und dessen rechter Druckraum 21 über die rechte Stelldruckzweigleitung 39 zum Tank 13 hin entlastet wird. Nun kann das von der Hilfspumpe 28 geförderte Druckmittel über die Anschlußleitung 33, die Speiseleitung 34, die Druckmittelleitung 44 und das sich noch in der Grundstellung befindliche 3/2-Wegeventil 6.1 in den linken Druckraum 20 des Stellzylinders 4 einströmen. Der sich dabei in diesem Druckraum 20 aufbauende, von der Drehzahl des Antriebsmotors 1 unabhängige Druck verschiebt als Stelldruck den Gleichgangkolben 19 nach rechts, wobei letzterer gleichzeitig die Steuerbüchse 25, wie bereits beschrieben, so lange zurückführt, bis das Vorsteuerventil 7 seine Mittelstellung einnimmt. Entsprechend dem Stellweg des in der erreichten Stellung verharrenden Gleichgangkolbens 19 wird die Hydropumpe 2 dabei auf größeres Fördervolumen eingestellt und der Hydromotor 3 in Drehung versetzt, vorausgesetzt, daß der im Leerlauf drehende Antriebsmotor 1 ein ausreichend großes Antriebsmoment aufbringt. Andernfalls wird mittels des Gaspedals 8 die Drehzahl des Antriebsmotors 1 so weit erhöht, bis das zum Anfahren erforderliche Antriebsmoment am Hydromotor 3 zur Verfügung steht. Durch Zurückführen des Handsteuergebers 49 in Richtung der Stellung Vₒ wird die Hydropumpe 2 in Richtung Null-Fördervolumen zurückgeschwenkt.

Bei Einstellung des Handsteuergebers 49 auf Vₘₐₓ ist die Hydropumpe 2 auf das dem Steuersignal entsprechende, beispielsweise maximale Fördervolumen ausgeschwenkt, vorausgesetzt, daß der drehzahlunabhängige Stelldruck mittels des Druckbegrenzungsventils 35 auf einen solchen Wert eingestellt ist, daß seine am Gleichgangkolben 19 wirkende hydraulische Kraft ausreicht, diesen Gleichgangkolben gegen die Kraft der Zentrierfeder 27 bis in seine rechte Endstellung zu verschieben. Wenn der drehzahlunabhängige Stelldruck jedoch auf einen geringeren Wert eingestellt wird, schwenkt die Hydropumpe 2 auch bei Einstellung des Handsteuergebers 49 auf Vₘₐₓ auf ein geringeres als das maximale Fördervolumen aus. Das Steuersignal kann durch entsprechende Einstellung des Potentiometers 47 unabhängig von der jeweiligen Stellung des Handsteuergebers 49 verändert werden.

Durch entsprechende Erhöhung der Drehzahl des Antriebsmotors 1 mittels des Gaspedals 8 kann auch bei dieser geringeren Fördervolumeneinstellung die gleiche Fahrzeuggeschwindigkeit wie bei maximaler Fördervolumeneinstellung erreicht werden.

Sobald der Handsteuergeber 49 auf die Stellung DA eingestellt wird, werden das 3/2-Wegeventil 6.1 und das Vorsteuerventil 7 in die Schaltstellung bzw. in die Durchflußendstellung umgeschaltet. Über die nun miteinander verbundenen Stelldruckleitungsabschnitte 42,43 und die linke Stelldruckzweigleitung 38 wird der Gleichgangkolben 19 mit dem vom DA-Regelventil 29 in nachstehend beschriebener Weise erzeugten drehzahl proportionalen Stelldruck so lange beaufschlagt und verschoben, bis Gleichgewicht zwischen der hydraulischen Kraft dieses Stelldrucks und der Kraft der Zentrierfedern 26,27 herrscht. Demzufolge wird die Hydropumpe 2 auf ein Fördervolumen ausgeschwenkt, das der jeweiligen Drehzahl des Antriebsmotors 1 (entsprechend einer vorgegebenen Drehzahl/Fördervolumen-Kennlinie) proportional ist.

Die mit der Drehzahl des Antriebsmotors 1 angetriebene Hilfspumpe 28 fördert einen drehzahlproportionalen Druckmittel strom, der an der Blende 30 eine Druckdifferenz erzeugt, die das DA-Regelventil 29 öffnet, wobei sich an dessen Ausgang ein im Stelldruckleitungsabschnitt 42 als Stelldruck zur Verfügung stehender Druck aufbaut, der der Druckdifferenz entgegenwirkt und das DA-Regelventil 29 so lange in Richtung Schließstellung verstellt, bis Kraftgleichgewicht am Ventilkörper herrscht. Auf diese Weise wird erreicht, daß der der Druckdifferenz entgegenwirkende Stelldruck dem von der Hydropumpe 28 geförderten drehzahl proportionalen Druckmittelstrom und damit der Drehzahl des Antriebsmotors 1 proportional ist.

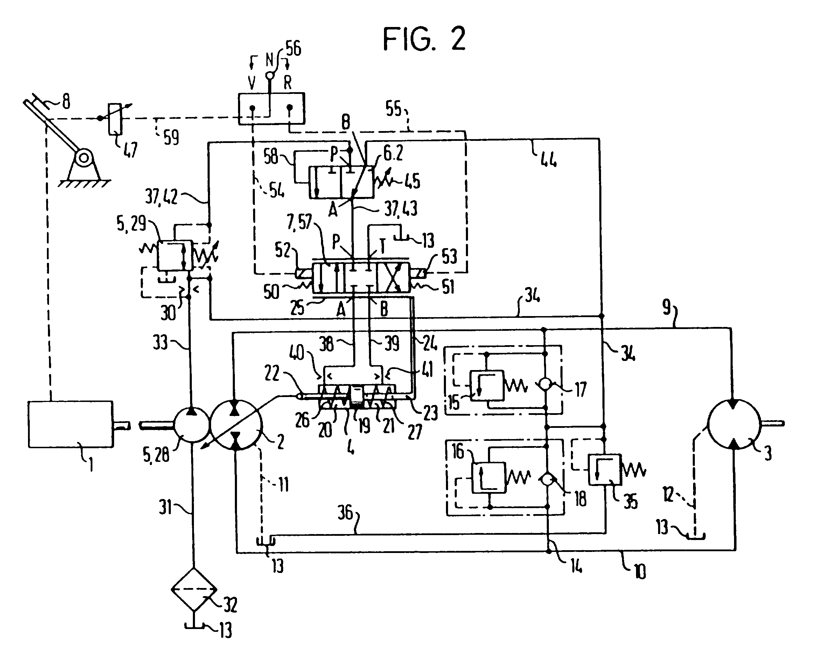

Der in Fig. 2 dargestellte hydrostatische Fahrantrieb gemäß dem zweiten Ausführungsbeispiel der Erfindung unterscheidet sich bei ansonsten gleicher Bauweise vom ersten Ausführungsbeispiel dadurch, daB das mit dem Bezugszeichen 6.2 bezeichnete 3/2-Wegeventil nicht elektrisch über die Steuersignalleitung 48, sondern hydraulisch über eine an den Stelldruckleitungsabschnitt 42 angeschlossene Steuerdruckleitung 58 mit dem drehzahlproportionalen Stelldruck ansteuerbar ist, und daß ferner der Handsteuergeber 49 entfällt und stattdessen das Vorsteuerventil 7 mittels des Gaspedals 8 betätigt wird. Zu diesem Zweck erfaßt das Potentiometer 47 die jeweilige Stellung des Gaspedals 8 und ist über eine Steuersignalleitung 59 mit dem Fahrtrichtungsschalter 56 verbunden.

Beim Fahren im Bereich der Vorsteuerung werden bei diesem Fahrantrieb nach Fig. 2 im Unterschied zur Fördervolumeneinstellung der Hydropumpe 2 unabhängig von der Drehzahl des Antriebsmotors 1 mit dem Fahrantrieb nach Fig. 1 bei Betätigung des Gashebels 8 sowohl die Drehzahl des Antriebsmotors 1 als auch das Fördervolumen der Hydropumpe 2 gleichsinnig verstellt. In der beispielsweise mechanischen Verbindung zwischen dem Gaspedal 8 und dem Antriebsmotor 1 kann auch ein vorzugsweise einstellbarer Totgang vorgesehen sein, der erst beim Umschalten des Vorsteuerventils 7 in die Durchflußendstellung überwunden wird, so daß die gleiche drehzahl unabhängige Steuerung des Fördervolumens der Hydropumpe wie im Ausführungsbeispiel nach Fig. 1 erzielt wird. Infolge der Ansteuerung mit dem drehzahlproportionalen Stelldruck schaltet das 3/2-Wegeventil 6.2 bei Drückung des Antriebsmotors 1 infolge hoher Belastung bei beispielsweise Bergauffahrt später und bei Antrieb des Fahrzeugs durch die Antriebsräder, etwa bei Bergabfahrt, früher als das Vorsteuerventil 7. Stimmen die mit dem Gaspedal 8 vorgegebene Solldrehzahl und die Istdrehzahl des Antriebsmotors 1 überein, so schalten beide Ventile 6.2 und 7 gleichzeitig.

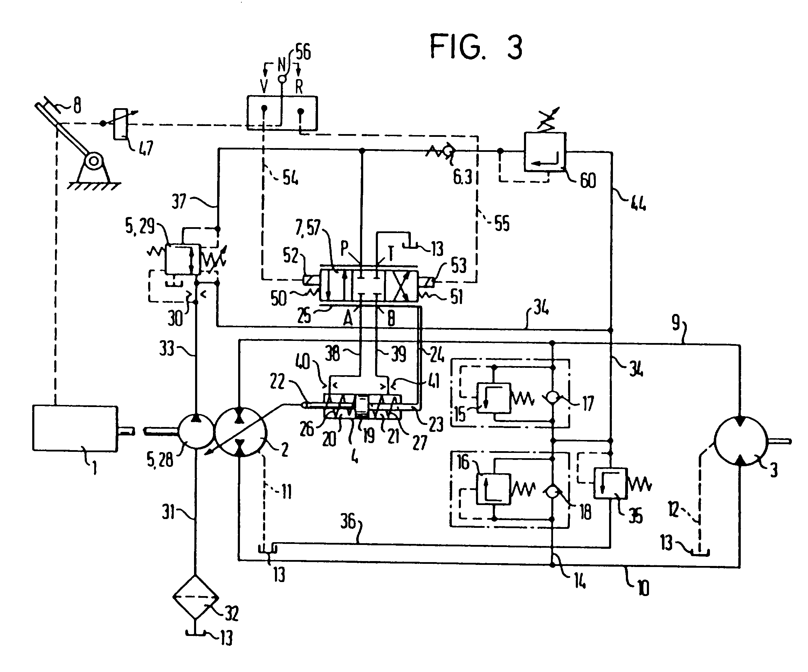

Der hydrostatische Fahrantrieb nach dem dritten Ausführungsbeispiel gemäß Fig. 3 unterscheidet sich bei ansonsten gleicher Bauweise von demjenigen nach Fig. 2 dadurch, daß die Schalteinrichtung als ein in der Druckmittelleitung 44 angeordnetes Rückschlagventil 6.3 ausgebildet ist, das in Richtung der sich durchgehend von dem DA-Regelventil 29 bis zum Vorsteuerventil 7 erstreckenden Stelldruckleitung 37 öffnet. Strömungsaufwärts des Rückschlagventils 6.3 ist ein Druckreduzierventil 60 in der Druckmittelleitung 44 angeordnet, das zwecks Erzeugung unterschiedlicher Ausgangsdrücke verstellbar ist. In der Grundstellung ist das Rückschlagventil 6.3 geöffnet, so daß es die Druckmittelleitung 44 mit der Stelldruckleitung 37 verbindet. In der Schalt- oder Schließstellung sperrt das Rückschlagventil 6.3 die Druckmittelleitung 44.

Bei diesem Fahrantrieb wird die Stelleinrichtung 4 so lange mit dem drehzahl unabhängigen Stelldruck in der Druckmittelleitung 44 beaufschlagt, wie dieser größer als der drehzahl proportionale Stelldruck in der Stelldruckleitung 37 ist und auf diese Weise das Rückschlagventil 6.3 in seiner Grundstellung hält. Sobald der drehzahlproportionale Stelldruck den drehzahlunabhängigen Stelldruck übersteigt, schließt das Rückschlagventil 6.3, wodurch die Beaufschlagung der Stelleinrichtung mit dem drehzahlunabhängigen Stelldruck unterbunden wird und das Fahren im drehzahlgeregelten Bereich möglich ist. Der Schaltpunkt des Rückschlagventils 6.3 von der Grund- in die Schaltstellung kann durch Einstellen des Ausgangsdrucks des Druckreduzierventils 60 verstellt werden.

Statt der vorstehend beschriebenen mechanischen Rückführung kann selbstverständlich auch jede andere Rückführung, beispielsweise mittels Federn oder hydraulischem Druck (Folgekolben) oder auch ein elektrisches Rückführsystem verwendet werden.

Anstelle der elektrischen Ansteuerung ist auch eine hydraulische Ansteuerung oder eine mechanische Betätigung des Vorsteuerventils 7 denkbar.

Statt der oder zusätzlich zur Hydropumpe kann auch der Hydromotor verstellbar ausgebildet und mit einer Stelleinrichtung, einem Vorsteuerventil und einer Schalteinrichtung ausgerüstet sein.

## Patentansprüche

1. Hydrostatischer Fahrantrieb,
mit einem Antriebsmotor (1) veränderlicher Drehzahl,
mit einem hydrostatischen Getriebe, das wenigstens zwei in einem hydraulischen Kreislauf angeordnete Hydromaschinen (2,3) umfaßt, deren eine mit dem Antriebsmotor in Antriebsverbindung steht und deren andere für den Antrieb wenigstens eines Fahrzeugrades vorgesehen ist,
mit einer Stelleinrichtung (4) zum Verstellen des Verdrängungsvolumens wenigstens einer der Hydromaschinen, (2,3)
mit einer Einrichtung (5) zum Erzeugen eines der Drehzahl des Antriebsmotors proportionalen Stelldrucks in einer zur Stelleinrichtung führenden Stelldruckleitung (37),
mit einem in der Stelldruckleitung angeordneten, manuell betätigbaren Vorsteuerventil (7), das über eine Rückführeinrichtung (24) mit der Stelleinrichtung in Verbindung steht und in Abhängigkeit von seiner jeweiligen Durchflußstellung innerhalb eines Durchflußverstellbereichs mit wirksamer Rückführung in die Schließstellung das Volumen eines der Stelleinrichtung (4) zugeführten Druckmittels steuert, und nach Umschaltung in eine Durchflußendstellung außerhalb des Bereichs der wirksamen Rückführung die Stelleinrichtung (4) mit dem drehzahlproportionalen Stelldruck beaufschlagt,
**dadurch gekennzeichnet**,
daß eine Druckmittelleitung (44) für das der Stelleinrichtung (4) bei wirksamer Rückführung des Vorsteuerventils (7) zuzuführende Druckmittel mit einem von der Drehzahl des Antriebsmotors (1) unabhängigen Druck über eine Schalteinrichtung (6.1; 6.2; 6.3) an die Stelldruckleitung (37, 43) strömungsaufwärts des Vorsteuerventils (7) anschließbar ist, und
daß die Schalteinrichtung (6.1; 6.2; 6.3) eine Grund- sowie eine Schaltstellung aufweist und in der Grundstellung die Druckmittelleitung (44) mit der Stelldruckleitung (37) verbindet und die Beaufschlagung der Stelleinrichtung (4) mit dem drehzahl proportionalen Stelldruck sperrt sowie in der Schaltstellung die Druckmittelleitung (44) sperrt und die Stelleinrichtung (4) mit dem drehzahl proportionalen Stelldruck beaufschlagt.

2. Hydrostatischer Fahrantrieb nach Anspruch 1,
**dadurch gekennzeichnet**,
daß die Schalteinrichtung (6.1) manuell von der Grund- in die Schaltstellung und zurück umschaltbar ist.

3. Hydrostatischer Fahrantrieb nach Anspruch 1,
**dadurch gekennzeichnet**, daß die Schalteinrichtung (6.2; 6.3) automatisch von der Grundin die Schaltstellung und zurück umschaltet.

4. Hydrostatischer Fahrantrieb nach Anspruch 3,
**dadurch gekennzeichnet**, daß die Schalteinrichtung (6.2; 6.3) automatisch in Abhängigkeit von der Drehzahl des Antriebsmotors (1) umschaltet.

5. Hydrostatischer Fahrantrieb nach wenigstens einem vorhergehenden Anspruch,
**dadurch gekennzeichnet**,
daß die Schalteinrichtung (6.1; 6.2; 6.3) und das Vorsteuerventil (7) etwa gleichzeitig von der Grund- in die Schaltstellung und zurück bzw. vom Durchflußverstellbereich mit wirksamer Rückführung in die Durchflußendstellung außerhalb des Bereichs der wirksamen Rückführung und zurück umschaltbar sind bzw. umschalten.

6. Hydrostatischer Fahrantrieb nach wenigstens einem vorhergehenden Anspruch,
**dadurch gekennzeichnet**,
daß der Schaltpunkt der Schalteinrichtung (6.1; 6.2; 6.3) einstellbar ist.

7. Hydrostatischer Fahrantrieb nach wenigstens einem vorhergehenden Anspruch,
**dadurch gekennzeichnet**,
daß die Schalteinrichtung (6.1; 6.2) ein 3/2-Wegeventil mit einem Arbeitsanschluß (P) an einen ersten, zur Einrichtung (5) zum Erzeugen des drehzahl proportionalen Stelldrucks führenden Abschnitt (42) der Stelldruckleitung (37), einem Arbeitsanschluß (A) an einen zweiten, zum Vorsteuerventil (7) weiterführenden Abschnitt (43) der Stelldruckleitung (37) und einem Arbeitsanschluß (B) an die Druckmittelleitung (44) ist.

8. Hydrostatischer Fahrantrieb nach Anspruch 7,
**dadurch gekennzeichnet**,
daß das 3/2-Wegeventil (6.1; 6.2) durch ein Steuersignal in Richtung der Schaltstellung ansteuerbar ist.

9. Hydrostatischer Fahrantrieb nach Anspruch 8,
**dadurch gekennzeichnet**,
daß das Steuersignal für Jas 3/2-Wegeventil (6.1) ein elektrisches Steuersignal ist.

10. Hydrostatischer Fahrantrieb nach Anspruch 8,
**dadurch gekennzeichnet**,
daß das Steuersignal für das 3/2-Wegeventil (6.2) der drehzahl proportionale Stelldruck ist.

11. Hydrostatischer Fahrantrieb nach wenigstens einem der Ansprüche 1 und 3 bis 6,
**dadurch gekennzeichnet**,
daß die Schalteinrichtung (6.3) ein in der Druckmittelleitung (44) angeordnetes Rückschlagventil ist, das in Richtung der Stelldruckleitung (37) öffnet.

12. Hydrostatischer Fahrantrieb nach Anspruch 11,
**dadurch gekennzeichnet**,
daß der Höchstwert des von der Drehzahl des Antriebsmotors (1) unabhängigen Drucks in der Druckmittelleitung (44) mindestens gleich dem Maximalwert des drehzahl proportionalen Stelldrucks ist.

13. Hydrostatischer Fahrantrieb nach Anspruch 12,
**dadurch gekennzeichnet**,
daß ein Druckreduzierventil (60) in der Druckmittelleitung (44) strömungsaufwärts des Rückschlagventils (6.3) angeordnet ist.

14. Hydrostatischer Fahrantrieb nach Anspruch 13,
**dadurch gekennzeichnet**,
daß das Druckreduzierventil (60) zwecks Erzeugung unterschiedlicher Ausgangsdrücke verstellbar ist.

15. Hydrostatischer Fahrantrieb nach wenigstens einem vorhergehenden Anspruch,
**dadurch gekennzeichnet**,
daß die Einrichtung (5) zum Erzeugen des der Drehzahl des Antriebsmotors (1) proportionalen Stelldrucks eine vom Antriebsmotor (1) angetriebene Hilfspumpe (28) und ein an diese über eine Anschlußleitung (33) angeschlossenes Regelventil (29) umfaßt, das den von der Hilfspumpe (28) erzeugten drehzahl proportionalen Druckmittel strom in einen drehzahlproportionalen Druck umwandelt, der als Stelldruck am Ausgang des Regelventils (29) in der Stelldruckleitung (37) zur Verfügung steht.

16. Hydrostatischer Fahrantrieb nach Anspruch 15,
**dadurch gekennzeichnet**,
daß die Druckmittelleitung (44) an die von der Hilfspumpe (28) zum Regelventil (29) führende Anschlußleitung (33) angeschlossen ist.

17. Hydrostatischer Fahrantrieb nach wenigstens einem vorhergehenden Anspruch,
**dadurch gekennzeichnet**,
daß das Vorsteuerventil (7) mittels des Gaspedals (8) zur Steuerung der Drehzahl des Antriebsmotors (1) betätigbar ist.

## Claims

1. Hydrostatic propulsion drive,
having a drive motor (1) of variable speed of rotation,
having a hydrostatic transmission which includes at least two hydraulic machines (2, 3) arranged in a hydraulic circuit, of which one machine is in driving connection with the driving motor and the other machine is provided for propelling at least one vehicle wheel,
having a setting device (4) for adjusting the displacement volume of at least one of the hydraulic machines (2, 3),
having a device (5) for generating a setting pressure proportional to the speed of the drive motor in a setting pressure line (37) leading to the setting device,
having a manually actuable pilot valve (7), arranged in the setting pressure line, which pilot valve is connected to the setting device via a follow-up device (24) and, in dependence upon its respective through-flow position within a through-flow adjustment range with effective follow-up into the closed position, controls the volume of a pressure medium supplied to the setting device (4), and after switching over into a through-flow end position outside the range of effective follow-up acts upon the setting device (4) with a setting pressure proportional to the speed,
characterized in that,
a pressure medium line (44) for pressure medium to be supplied to the setting device (4) when follow-up of the pilot valve (7) is effective can be connected to the setting pressure line (37, 43) upstream of the pilot valve (7) via a switching device (6.1; 6.2; 6.3) with a pressure independent of the speed of the drive motor (1) and
in that the switching device (6.1; 6.2; 6.3) has a normal position and a switched position and in the normal position connects the pressure medium line (44) to the setting pressure line (37) and blocks action of the speed-proportional setting pressure on the setting device (4), and in the switched position blocks the pressure medium line (44) and acts upon the setting device (4) with the speed-proportional setting pressure.

2. Hydrostatic travel drive according to claim 1,
characterized in that,
the setting device (6.1) is manually switchable from the normal position into the switched position, and back.

3. Hydrostatic travel drive according to claim 1,
characterized in that,
the switching device (6.2; 6.3) switches automatically from the normal position into the switched position, and back.

4. Hydrostatic travel drive according to claim 3,
characterized in that,
the switching device (6.2; 6.3) switches automatically in dependence upon the speed of the drive motor (1).

5. Hydrostatic travel drive according to any preceding claim,
characterized in that,
the switching device (6.1; 6.2; 6.3) and the pilot valve (7) are switchable or switch approximately simultaneously from the normal position into the switched position, and back, or from the through-flow adjustment range with effective follow-up into the through-flow end position outside the range of effective follow-up, and back.

6. Hydrostatic travel drive according to any preceding claim,
characterized in that,
the switching point of the switching device (6.1; 6.2; 6.3) is adjustable.

7. Hydrostatic travel drive according to any preceding claim,
characterized in that,
the switching device (6.1; 6.2) is a 3/2 directional control valve having a working connection (P) to a first section (42) of the setting pressure line (37), the first section leading to the device (5) for generating the speed-proportional setting pressure, a working connection (A) to a second section (43) of the setting pressure line (37) leading further to the pilot valve (7), and a working connection (B) to the pressure medium line (44).

8. Hydrostatic travel drive according to claim 7,
characterized in that,
the 3/2 directional control valve (6.1; 6.2) is controllable by means of a control signal in the direction of the switched position.

9. Hydrostatic travel drive according to claim 8,
characterized in that,
the control signal for the 3/2 directional control valve (6.1) is an electrical control signal.

10. Hydrostatic travel drive according to claim 8,
characterized in that,
the control signal for the 3/2 directional control valve (6.2) is the speed-proportional setting pressure.

11. Hydrostatic travel drive according to any of claims 1 and 3 to 6,
characterized in that,
the switching device (6.3) is a non-return valve arranged in the pressure medium line (44), which non-return valve opens in the direction of the setting pressure line (37).

12. Hydrostatic travel drive according to claim 11,
characterized in that,
the highest value of the pressure, in the pressure medium line (44), independent of the speed of the drive motor (1) is at least equal to the maximum value of the speed-proportional setting pressure.

13. Hydrostatic travel drive according to claim 12,
characterized in that,
a pressure reduction valve (60) is arranged in the pressure medium line (44) upstream of the non-return valve (6.3).

14. Hydrostatic travel drive according to claim 13,
characterized in that,
the pressure reduction valve (60) is adjustable for the purpose of generating differing output pressures.

15. Hydrostatic travel drive according to any preceding claim,
characterized in that,
the device for generating the setting pressure proportional to the speed of the drive motor (1) includes an auxiliary pump (28) driven by the drive motor (1) and a control valve (29) connected to the auxiliary pump via a connection line (33), which control valve transforms the speed-proportional pressure medium flow generated by the auxiliary pump (28) into a speed-proportional pressure which is available as setting pressure at the output of the control valve (29) in the setting pressure line (37).

16. Hydrostatic travel drive according to claim 15,
characterized in that,
the pressure medium line (44) is connected to the connection line (33) leading from the auxiliary pump (28) to the control valve (29).

17. Hydrostatic travel drive according to any preceding claim,
characterized in that,
the pilot valve (7) is actuable by means of the gas pedal (8) for controlling the speed of the drive motor (1).

## Revendications

1. Mécanisme d'entraînement hydrostatique, comportant un moteur d'entraînement (1) à vitesse variable, comportant une transmission hydrostatique, qui comporte au moins deux machines hydrauliques (2, 3) montées dans un circuit hydraulique, dont une est en liaison d'entraînement avec le moteur d'entraînement et dont l'autre est prévue pour l'entraînement d'au moins une roue du véhicule, comportant un dispositif de réglage (4) pour le réglage de la cylindrée d'au moins l'une des machines hydrauliques (2, 3), comportant un dispositif (5) pour produire une pression de réglage, proportionnelle à la vitesse de rotation du moteur d'entraînement, dans une conduite de pression de réglage (37), menant au dispositif de réglage, comportant une soupape pilote (7), actionnable manuellement, placée dans la conduite de pression de réglage, qui est en liaison avec le dispositif de réglage, par un dispositif de rappel (24) et commande, en fonction de sa position d'écoulement respective, à l'intérieur d'une zone de réglage de passage, avec rappel efficace dans la position de fermeture, le volume d'un fluide sous pression envoyé au dispositif de réglage (4), et après commutation dans une position de fin de course de passage, à l'extérieur du domaine du rappel actif, sollicite le dispositif de réglage (4) avec la pression de réglage proportionnelle à la vitesse de rotation, caractérisé en ce qu'une conduite de fluide sous pression (44) pour le fluide sous pression à envoyer au dispositif de réglage (4), en cas de rappel actif de la soupape pilote (7), avec une pression indépendante de la vitesse de rotation du moteur d'entraînement (1), peut être raccordée, par un dispositif de commutation (6.1; 6.2 ; 6.3), à la conduite de pression de réglage (37, 43), en amont de la soupape pilote 7, et en ce que le dispositif de commutation (6.1 ; 6.2 ; 6.3) présente une position de base ainsi qu'une position de commutation et dans la position de base, relie la conduite de fluide sous pression (44) avec la conduite de pression de réglage (37) et bloque l'alimentation du dispositif de réglage (4) avec la pression de réglage proportionnelle à la vitesse de rotation et bloque aussi, dans la position de commutation, la conduite de fluide sous pression (44) et alimente le dispositif de réglage (4) avec la pression de réglage proportionnelle à la vitesse de rotation.

2. Mécanisme d'entraînement hydrostatique selon la revendication 1, caractérisé en ce que le dispositif de commutation (6.1) peut être commutés manuellement de la position de base dans la position de commutation et inversement.

3. Mécanisme d'entraînement hydrostatique selon la revendication 1, caractérisé en ce que le dispositif de commutation (6.2 ; 6.3) commute automatiquement de la position de base dans la position de commutation et inversement.

4. Mécanisme d'entraînement hydrostatique selon la revendication 3, caractérisé en ce que le dispositif de commutation (6.2 ; 6.3) commute automatiquement en fonction de la vitesse de rotation du moteur d'entraînement (1).

5. Mécanisme d'entraînement hydrostatique selon l'une au moins des revendications précédentes, caractérisé en ce que le dispositif de commutation (6.1 ; 6.2 ; 6.3) et la soupape pilote (7) peuvent commuter ou commutent simultanément de la position de base dans la position de commutation et inversement ou du domaine de réglage de passage avec rappel actif dans la position de fin de course de passage, à l'extérieur du domaine du rappel actif et inversement.

6. Mécanisme d'entraînement hydrostatique selon l'une au moins des revendications précédentes, caractérisé en ce que le point de commutation du dispositif de commutation (6.1 ; 6.2 ; 6.3) est réglable.

7. Mécanisme d'entraînement hydrostatique selon l'une au moins des revendications précédentes, caractérisé en ce que le dispositif de commutation (6.1 ; 6.2) est une soupape à 3/2 voies avec un raccord de travail (P) à une première portion (42) de la conduite de pression de réglage (37), menant au dispositif (5) de production de la pression de réglage proportionnelle à la vitesse de rotation, avec un raccord de travail (A) à une deuxième portion (43) de la conduite de pression de réglage (37), menant plus loin à la soupape pilote (7) et avec un raccord de travail (8) à la conduite de fluide sous pression (44).

8. Mécanisme d'entraînement hydrostatique selon la revendication 7, caractérisé en ce que la soupape à 3/2 voies (6.1 ; 6.2) est commandable par un signal de commande en direction de la position de commutation.

9. Mécanisme d'entraînement hydrostatique selon la revendication 8, caractérisé en ce que le signal de commande pour la soupape à 3/2 voies (6.1) est un signal de commande électrique.

10. Mécanisme d'entraînement hydrostatique selon la revendication 8, caractérisé en ce que le signal de commande pour la soupape à 3/2 voies (6.2) est la pression de réglage proportionnelle à la vitesse de rotation.

11. Mécanisme d'entraînement hydrostatique selon l'une au moins des revendications 1 et 3 à 6, caractérisé en ce que le dispositif de commutation (6.3) est une soupape de non-retour, placée dans la conduite de fluide sous pression (44), qui s'ouvre en direction de la conduite de pression de réglage (37).

12. Mécanisme d'entraînement hydrostatique selon la revendication 11, caractérisé en ce que la valeur maximale de la pression, indépendante de la vitesse de rotation du moteur d'entraînement (1), dans la conduite de fluide sous pression (44), est au moins égale à la valeur maximale de la pression de réglage proportionnelle à la vitesse de rotation.

13. Mécanisme d'entraînement hydrostatique selon la revendication 12, caractérisé en ce qu'une soupape de réduction de pression (60) est placée dans la conduite de fluide sous pression (44), en amont de la soupape de non-retour (6.3).

14. Mécanisme d'entraînement hydrostatique selon la revendication 13, caractérisé en ce que la soupape de réduction de pression (60) est réglable en vue de la production de pressions de sortie différente.

15. Mécanisme d'entraînement hydrostatique selon l'une au moins de revendications précédentes, caractérisé en ce que le dispositif (5) de production de la pression de réglage, proportionnelle à la vitesse de rotation du moteur d'entraînement (1), comporte une pompe auxiliaire (28), entraînée par le moteur d'entraînement (1) et une soupape de régulation (29), raccordée à celle-ci par une conduite de raccord (33), qui convertit le courant de fluide sous pression, proportionnel à la vitesse de rotation, produit par la pompe auxiliaire (28), en une pression proportionnelle à la vitesse de rotation, qui est disponible en tant que pression de réglage à la sortie de la soupape de régulation (29), dans la conduite de pression de réglage (37).

16. Mécanisme d'entraînement hydrostatique selon la revendication 15, caractérisé en ce que la conduite de fluide sous pression (44) est raccordée à la conduite de raccord (33), menant de la pompe auxiliaire (28) à la soupape de régulation (29).

17. Mécanisme d'entraînement hydrostatique selon l'une au moins des revendications précédentes, caractérisé en ce que la soupape pilote (7) est actionnable au moyen de la pédale d'accélérateur (8) en vue de la commande de la vitesse de rotation du moteur d'entraînement (1).
